# EUROPÄISCHE PATENTSCHRIFT

(11) **EP 0 770 208 B1**
(45) Veröffentlichungstag und Bekanntmachung des Hinweises auf die Patenterteilung: **09.10.2002**
(21) Anmeldenummer: 95925683.5
(22) Anmeldetag: 13.07.1995
(51) Int. Cl.: G01N 21/55

(54) **VERFAHREN UND ANORDNUNG ZUR BRECHZAHLMESSUNG VERSCHIEDENER MEDIEN**
PROCESS AND DEVICE FOR DETERMINING THE REFRACTIVE INDEX OF DIFFERENT MEDIUMS
PROCEDE ET DISPOSITIF DE MESURE DE L'INDICE DE REFRACTION DE DIFFERENTS MILIEUX

(30) Priorität: 13.07.1994 DE 4424628
(43) Veröffentlichungstag der Anmeldung: 02.05.1997
(73) Patentinhaber: Lau, Matthias, 01307 Dresden (DE); Kirschner, Uwe, 01123 Dresden (DE)
(72) Erfinder: Lau, Matthias, 01307 Dresden (DE); Kirschner, Uwe, 01123 Dresden (DE)
(74) Vertreter: Pfenning, Meinig & Partner GbR
(86) Internationale Anmeldenummer: DE9500910
(87) Internationale Veröffentlichungsnummer: WO96002822

(56) Entgegenhaltungen:
- EP-A- 0 410 505
- SENSORS AND ACTUATORS B, Bd.A43, Nr.1/3, Juni 1994, LAUSANNE CH Seiten 44 - 48 R.C. JORGENSEN ET AL. 'control of the dynamic range and sensitivity of a surface plasmon resonance based fiber optic sensor'
- SENSORS AND ACTUATORS B, Bd.B12, Nr.3, 15. April 1993, LAUSANNE CH Seiten 213 - 220 R.C. JORGENSEN ET AL. 'a fiber-optic chemical sensor based on surface plasmon resonance'
- SENSORS AND ACTUATORS B, Bd.B12, Nr.3, 15. April 1993, LAUSANNE CH Seiten 221 - 223, XP397511 L. DE MARIA ET AL. 'fiber-optic sensor based on surface plasmon interrogation' in der Anmeldung erwähnt
- REVIEW OF SCIENTIFIC INSTRUMENTS, Bd.49, Nr.8, August 1978, NEW YORK US Seiten 1090 - 1094 N. ABUAF ET AL. 'optical probe for local void fraction and interface velocity measurements'

## Beschreibung

Die Erfindung betrifft ein Verfahren sowie eine Anordnung zur Durchführung des Verfahrens, womit die Brechzahl verschiedener Medien meßbar ist. Es wird dazu die Anregung von Oberflächenplasmonen in einer Grenzschicht Metall-Dielektrikum und die starke Abhängigkeit der Resonanzbedingungen von der Brechzahl der an die Metallschicht angrenzenden Schicht oder des Schichtsystems ausgenutzt. Die Erfindung bezieht sich insbesondere auf die faseroptische Zu- und Ableitung des Signals. Mögliche Anwendungen der Erfindung liegen im Aufbau von faseroptischen Sensoren zur Messung physikalischer, chemischer und biologischer Größen, die mittelbar über eine Brechzahländerung detektierbar sind.

Faseroptische SPR-Sensoren werden seit einigen Jahren intensiv untersucht. Die ersten Ansätze, (EP-PS 0410505) gingen dabei von der klassischen Kretschmann-Anordnung mit einem massiven Glasprisma aus, wobei zur Ein- und Auskopplung des monochromatischen Lichts zwei Multimodefasern zum Einsatz kommen. Gemessen wird die Intensität der in die Empfangsfaser reflektierten Strahlung, wobei der Arbeitspunkt durch Verschiebung dieser Faser eingestellt wird.

Aus der Veröffentlichung "Fiber-optic sensor based on surface plasmon interrogation", Letizia De Maria, et. al. Sensors and Actuators B, 12 (1993) 221-223, ist ein Sensor bekannt, der die schräg geschliffene und beschichtete Endfläche einer Monomode-Faser als Sensorkopf nutzt.

Auch hier wurde mit monochromatischem Licht eines He-Ne-Lasers gearbeitet und die Polarisation mittels einer rotierenden λ/2-Verzögerungsplatte eingestellt. Das am Detektor entstehende sinusförmige Signal weist ein Minimum und ein Maximum auf, da die Oberflächenplasmonen nur durch die TM-Welle angeregt werden, während die TE-Welle als Referenzsignal dient. Eine exakte Messung erfordert in dieser Anordnung eine optimale Polarisation sowie eine hohe Wellenlängenstabilität. Nachteilig dabei ist die notwendige Mechanik für die Rotation der λ/2-Platte sowie die geringe vom Sensorkopf zurückgestreute Intensität.

Aus der EP-PS 0326291 ist weiterhin ein SPR-Sensor mit einer Glasfaser bekannt, bei dem jedoch die faseroptische Ableitung des gewonnenen Signals nicht möglich ist.

Ein mit der DE-PS 4305830 vorgestellter faseroptischer SPR-Sensor ist aufgrund der Verwendung zweier Fasern zur Anregung und Rückreflexion des eingekoppelten Lichts nur schwer justierbar.

Ein weiterer SPR-Sensor auf der Basis von Monomode-Fasern ist in "New 'in-line' optical-fibre sensor based on surface plasmon excitation", R. Alonso, F. Villuendas, J. Tornos and J. Pelayo, Sensors and Actuators A, 37-38 (1993) 187-192 beschrieben. Hierbei wurde die Anregung der Oberflächenplasmonenresonanz mit einer dünnen Goldschicht (15-35 nm) auf dem abgeschliffenen Mantel einer Epoxid-Harz eingebetteten Monomodefaser realisiert. Auch hier wird linear polarisiertes, monochromatisches Licht in die Faser eingekoppelt und die Transmission als Meßgröße ausgewertet.

Durch die Verwendung von kohärenten Quellen und der notwendigen Wellenlängenstabilisierung sind in dieser Variante nur schwer preiswerte Sensoren herstellbar.

In der Veröffentlichung "A Novel surface Plasmon Resonance based Fiber Optic Sensor Applied to Biochemical Sensing", R. C. Jorgenson, et. al., SPIE VOL. 1886 (1993) S. 35-48, dient die bedampfte Zylinderfläche des Kerns einer Multimode-Glasfaser zur Anregung von Oberflächenplasmonen mit breitbandigem Licht. Das an der Faserspitze reflektierte Signal wird mit Hilfe eines Spektrometers analysiert. Die Wellenlänge des Dämpfungsmaximums ist dabei ein Maß für die Brechzahl des an der Metallschicht angrenzenden Mediums. Ein entscheidender Nachteil dieser Anordnung besteht in der starken Verbreiterung der Resonanz durch die Vielzahl an Moden und die somit vielfache Anregung von Oberflächenplasmonen bei verschiedenen Wellenlängen.

Die Aufgabe der Erfindung besteht darin, einen energetisch günstigen faseroptischen SPR-Sensor anzugeben, der für die Verwendung mit Multimodefasern geeignet ist, ohne dabei die nachteilige Verbreiterung der Resonanz durch eine Vielzahl unterschiedlicher Moden in Kauf nehmen zu müssen.

Diese Aufgabe wird erfindungsgemäß durch ein Verfahren gelöst, wie es in Anspruch 1 definiert ist. Die erfindungsgemäße Anordnung ist Gegenstand des Anspruchs 2.

Zu bevorzugende Weiterbildungen der Erfindung sind Gegenstand der Unteransprüche.

Das erfindungsgemäße Verfahren zur Anregung von Oberflächeplasmonenresonanz ist vorteilhaft geeignet zur Signalzu- und -ableitung mittels optischer Fasern. Besonders bei Verwendung von Multimodefasern und breitbandigem Licht sind potentiell preiswerte Sensoren herstellbar. Dabei wurde an die Fortschritte bei der Entwicklung miniaturisierter Spektrometer, zum Beispiel in LIGA-Technik gedacht. Gegenüber der Bedampfung der Zylinderfläche wird mit der erfindungsgemäßen Anordnung aufgrund der möglichen Strahlkollimierung durch entsprechende Linsen eine schmalere Resonanz erzielt. In den Weiterbildungen der Anordnung mit ebenen Endflächenteilen ist es durch Einsatz eines Polarisationsfilters möglich, die TE-Welle auszuschalten, wodurch die Intensität reflektierten Lichts der Resonanzwellenlänge 0 % betragen kann.

Ein wesentlicher Vorteil von Varianten, die ohne Monomodefasern oder kohärente Quellen auskommen, liegt in preiswerteren Bauelementen und geringen Empfindlichkeiten gegenüber Wellenlängenschwankungen.

Weitere Vorteile, Merkmale und Anwendungsmöglichkeiten der vorliegenden Erfindung ergeben sich aus der nachfolgenden Beschreibung im Zusammenhang mit der Zeichnung. Darin zeigen:

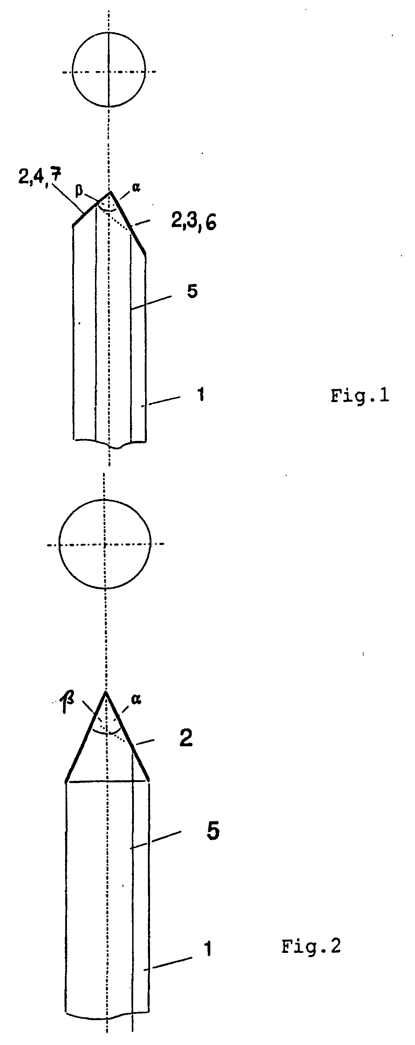

- Fig. 1:: die Endfläche eines optisch transparenten Körpers mit zwei ebenen, schrägen Teilflächen
- Fig. 2:: die Endfläche eines optisch transparenten Körpers mit kegelförmig ausgebildeter Endfläche
- Fig. 3:: die Endfläche eines optisch transparenten Körpers mit kegelstumpfförmig ausgebildeter Endfläche
- Fig. 4:: Blockschaltbild der beispielhaften Ansteuer- und Auswerteeinheit
- Fig. 5:: die schematische Darstellung des Sensorkopfes

Wie aus den Figuren ersichtlich, wird parallel zur Achse eines optisch transparenten Zylinders 1 einfallendes Licht 5 von mehreren Teilflächen 3, 4 der bearbeiteten Endfläche 2 derart reflektiert, daß es nach mindestens zwei Reflexionen wieder parallel zur Achse im Zylinder 1 zurückgeführt wird, wobei durch Winkel und verwendete Wellenlänge bei wenigstens einer Reflexion Oberflächenplasmonen angeregt werden. Ein geeigneter Winkel ist dabei α = β = 30 °. Die zweite nur zur Reflexion dienende Teilfläche 4 kann, wenn dies fertigungstechnisch günstig ist, mit demselben Schichtsystem 7 beschichtet sein, wenn die SPR-Metallschicht einen ausreichend hohen Reflexionsfaktor besitzt.

Der zylindrische Körper 1 kann dabei beispielsweise ein Glasstab, eine Stablinse, eine GRIN-Linse oder auch eine optische Faser sein. Das verwendete Material muß für die verwendete Wellenlänge transparent sein.

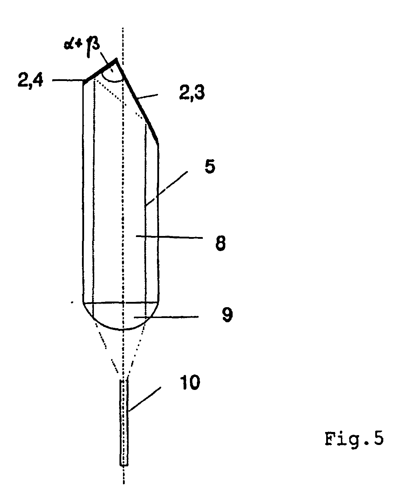

Im Beispiel nach Fig. 5 ist die Endfläche 2 einer Stablinse 8 derart bearbeitet, daß zwei ebene Teilflächen 3, 4 entstehen, die einen Winkel α + β = 90 ° einschließen, wobei die Winkel α und β = 45 sein können. Dabei liegt die Schnittgerade der Teilflächen 3, 4 senkrecht zur Zylinderachse 1. Im Brennpunkt der konvexen Linsen 9 am anderen Ende des Zylinders 1 ist in der verlängerten Zylinderachse die Endfläche einer Multimodefaser 10 angeordnet, die der Zuführung und Ableitung breitbandigen Lichtes 5 dient.

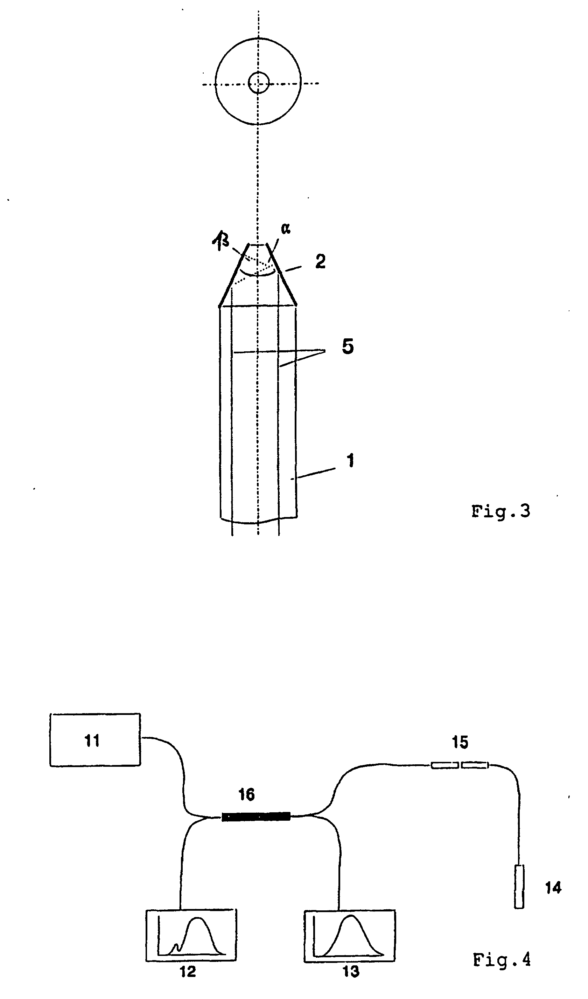

In Figur 4 ist eine mögliche Optoelektronik zur Auswertung des Sensorsignals schematisch dargestellt.

Die Zuleitungen zur Quelle 11, Spektrometer 12, 13 und Sensorkopf 14 über eine Steckverbindung 15 sind an einem X-Koppler 16 angeschlossen. Die Spektrometer 12, 13 dienen der Gewinnung des Sensorsignals sowie eines Referenzsignals zur Verrechnung des Quellenspektrums.

## Patentansprüche

1. Verfahren zur Brechzahlmessung verschiedener Medien, über deren Änderung chemische, physikalische und biologische Größen mit Hilfe der Oberflächenplasmonenresonanz (SPR) detektierbar sind, wobei eine optische Strahlung (5) in einen für diese optische Strahlung transparenten zylindrischen Körper (1) eingekoppelt wird,
**dadurch gekennzeichnet, daß** die eingekoppelte optische Strahlung (5) von der Endfläche (2) des zylindrischen Körpers (1) nach mindestens zweifacher Reflexion über mindestens zwei gegeneinander geneigte Teilflächen (3, 4) der Endfläche (2) oder die zumindest teilweise kegelförmig ausgebildete Endfläche (2) wieder zur Ein- und Auskoppelstelle des zylindrischen Körpers (1) zurückgeführt wird, wobei wenigstens bei einer derartigen Reflexion, bei einer Wellenlänge der optischen Strahlung (5) und dem Neigungswinkel α und/oder β Oberflächenplasmonenresonanz angeregt wird.

2. Anordnung zur Durchführung des Verfahrens nach Anspruch 1,
**dadurch gekennzeichnet, daß** die Endfläche (2) des zylindrischen Körpers (1) eine unter einem Winkel (α) gegen die Längsachse des zylindrischen Körpers (1) geneigte Teilfläche (3) aufweist, die für die Messung mittels Oberflächenplasmonenresonanz mit einer an sich bekannten SPR-anregenden Schicht bzw. einem solchen Schichtsystem (6) versehen ist und an der Endfläche (2) eine weitere unter einem Winkel (β) geneigte Teilfläche (4) angeordnet ist, die entweder nur reflektierend oder ebenfalls mit einer Oberflächenplasmonenresonanz anregenden Beschichtung (6) versehen ist.

3. Anordnung nach Anspruch 2,
**dadurch gekennzeichnet, daß** die Summe der Winkel α und β 90 ° ergibt.

4. Anordnung nach einem der Ansprüche 2 oder 3,
**dadurch gekennzeichnet, daß** die geneigten Teilflächen (3, 4) aneinander gelagerte Teilkegeloder Teilkegelstumpfoberflächen sind.

5. Anordnung nach einem der Ansprüche 2 bis 4,
**dadurch gekennzeichnet, daß** die Winkel α und β gleich 30 ° sind.

6. Anordnung nach einem der Ansprüche 2 bis 5,
**dadurch gekennzeichnet, daß** die Winkel α und β gleich 45 ° sind.

7. Anordnung nach einem der Ansprüche 2 bis 6,
**dadurch gekennzeichnet, daß** der zylindrische Körper (1) ein zylindrischer Lichtwellenleiter im Sinne einer optischen Faser oder eine Stablinse ist.

8. Anordnung nach einem der Ansprüche 2 bis 7,
**dadurch gekennzeichnet, daß** die optische Strahlung (5) über eine externe optische Linse (9) oder ein optisches System in den zylindrischen Körper (1) ein- und auskoppelbar ist.

9. Anordnung nach einem der Ansprüche 2 bis 7,
**dadurch gekennzeichnet, daß** der zylindrische Körper (1) eine Stab- oder GRIN-Linse ist.

10. Anordnung nach einem der Ansprüche 2 bis 9,
**dadurch gekennzeichnet, daß** zur Ausschaltung des TE-Wellenanteils ein Polarisationsfilter vorhanden ist.

## Claims

1. Process for determining the refractive index of diffrent mediums, upon an alteration in which chemical, physical and biological magnitudes are detectable with the aid of surface plasmon resonance (SPR), an optical beam (5) being coupled into a cylindrical body (1) transparent to this optical beam,
**characterised in that**
the coupled optical beam (5) is reflected back from the end surface (2) of the cylindrical body (1) after at least two reflections via at least two part surfaces (3, 4) inclined towards one another of the end surface (2), or the end surface (2) which is at least partly conical in shape, back to the coupling and de-coupling point, surface plasmon resonance being excited at least during one such reflection, at a wavelength of the optical beam (5) and the angle of inclination α and/or β.

2. Device for carrying out the process according to claim 1,
**characterised in that**,
the end surface (2) of the cylindrical body (1) has a part surface (3) inclined at an angle (α) towards the longitudinal axis of the cylindrical body (1), said part surface (3) being provided, for measurement by means of surface plasmon resonance, with an SPR-exciting layer known per se or such a layer system (6) and
the part surface (3) adjoins a further part surface (4) inclined at an angle (β), said part surface (4) being either only reflective or likewise being provided with a coating (6) exciting surface plasmon resonance.

3. Device according to Claim 2,
**characterised in that**
the sum of the angles α and β comes to 90°.

4. Device according to one of Claims 2 or 3,
**characterised in that**
the inclined part surfaces (3, 4) are partial conical or partial frustoconical surfaces laid against one another.

5. Device according to one of Claims 2 to 4,
**characterised in that**
the angles α and β are equal to 30°.

6. Device according to one of Claims 2 to 5,
**characterised in that**
the angles α and β are equal to 45°.

7. Device according to one of Claims 2 to 6,
**characterised in that**
the cylindrical body (1) is a cylindrical lightwave guide in the sense of an optical fibre or a bar lens.

8. Device according to one of Claims 2 to 7,
**characterised in that**
the optical beam (5) may be coupled and decoupled via an external optical lens (9) or an optical system into the cylindrical body (1).

9. Device according to one of the Claims 2 to 8,
**characterised in that**
the cylindrical body (1) is a bar lens or a GRIN-lens.

10. Device according to one of Claims 2 to 9,
**characterised in that**
a polarisation filter is present in order to exclude the TE-wave component.

## Revendications

1. Procédé pour déterminer l'indice de réfraction des milieux différents suite à la modification desquels des valeurs chimiques, physiques et biologiques au moyen de la résonance du plasma à la surface (SPR) sont détectables, au moment où un rayonnement optique (5) se couple dans un corps cylindrique (1) qui est transparent pour ce rayonnement optique (5), et qui se **caractérise** ainsi : le rayonnement optique couplé (5) de la surface terminale (2) du corps cylindrique (1), après une réflexion au moins double sur au moins deux surfaces partielles inclinées les unes contre les autres (3,4) de la surface terminale (2) ou la surface terminale (2) dont la forme est au moins partiellement conique est ramené à l'endroit du couplage et découplage du corps cylindrique (1) : au moment où au moins une des réflexions spécifiées ci-dessus survient, avec une longueur d'ondes du rayonnement optique (5) et l'angle d'inclinaison α et/ou β, une résonance du plasma à la surface sera déclenchée.

2. Disposition pour l'exécution du procédé selon la revendication 1, se caractérisant ainsi : la surface terminale (2) du corps cylindrique (1) présente une surface partielle inclinée sous l'angle (α) par rapport à l'axe longitudinal du corps cylindrique (1), laquelle surface partielle inclinée est garnie, pour ce mesurage effectué à l'aide de la résonance du plasma à la surface, d'un enduit ou d'un système d'enduit de ce genre (6) de déclenchement SPR connu en soi, et sur la surface terminale (2) est située une surface partielle complémentaire (4) inclinée sous un angle (β) qui est soit seulement réfléchissante soit couvert d'un enduit (6) déclenchant la résonance du plasma à la surface.

3. Disposition selon la revendication 2, se caractérisant ainsi : la somme des angles α et β est de 90°.

4. Disposition selon une des revendications 2 ou 3, se caractérisant ainsi : les surfaces partielles inclinées (3,4) sont des surfaces sous forme d'un cône primitif ou d'un cône tronconique situées l'une contre l'autre.

5. Disposition selon une des revendications 2 - 4, se caractérisant ainsi : les angles α et β sont de 30°.

6. Disposition selon une des revendications 2 - 5, se caractérisant comme suit : les angles α et β sont de 45°.

7. Disposition selon une des revendications 2 - 6, se caractérisant ainsi : le corps cylindrique (1) est un guide d'ondes lumineuses cylindrique au sens d'une fibre optique ou d'une lentille en forme de barre.

8. Disposition selon une des revendications 2 - 7, se caractérisant par le fait que le corps cylindrique (1) permet un couplage et un découplage du rayonnement optique (5) par une lentille optique externe (9) ou par un système optique.

9. Disposition selon une des revendications 2 - 7, se caractérisant par le fait que le corps cylindrique (1) est une lentille en forme de barre ou une lentille GRIN.

10. Disposition selon une des revendications 2 - 9, se caractérisant par le fait qu'il existe un polaroid supprimant la part des ondes de la décharge partielle.
